(19) **Europäisches Patentamt**

**European Patent Office**

**Office européen des brevets**

(11) **EP 0 553 149 B1**

(12) **EUROPEAN PATENT SPECIFICATION**

(45) Date of publication and mention
of the grant of the patent:
**20.11.1996 Bulletin 1996/47**

(21) Application number: **91917730.3**

(22) Date of filing: **10.10.1991**

(51) Int Cl.⁶: **C02F 1/02**, C02F 9/00

(86) International application number:
**PCT/CA91/00363**

(87) International publication number:
**WO 92/06925 (30.04.1992 Gazette 1992/10)**

(54) **APPARATUS AND METHOD FOR HYDROLYSIS OF CYANIDE-CONTAINING LIQUIDS**

VORRICHTUNG- UND VERFAHREN ZUR HYDROLYSE VON CYANID-ENTHALTENDEN
FLÜSSIGKEITEN

APPAREIL ET PROCEDE POUR HYDROLYSER DES LIQUIDES CONTENANT DU CYANURE

(84) Designated Contracting States:
**AT BE CH DE DK ES FR GB GR IT LI LU NL SE**

(30) Priority: **19.10.1990 US 600516**

(43) Date of publication of application:
**04.08.1993 Bulletin 1993/31**

(73) Proprietor: **ALCAN INTERNATIONAL LIMITED**
**Montreal Quebec H3A 3G2 (CA)**

(72) Inventors:
• **BELL, David, Holden**
**Jonquiere, Quebec G7S 3K9 (CA)**
• **FORTIER, Joseph, Eugene, François**
**Jonquiere, Quebec G7S 2T2 (CA)**
• **HAVENS, Haven, Milford**
**Jonquiere, Quebec G7S 4X2 (CA)**

(74) Representative: **Gaunt, Robert John**
**Stevens, Hewlett & Perkins**
**1 Serjeants' Inn**
**Fleet Street**
**London EC4Y 1LL (GB)**

(56) References cited:
**EP-A- 0 080 867**          **EP-A- 0 349 035**
**GB-A- 2 076 388**

## Description

Technical Field

This invention relates to an apparatus and method for hydrolyzing cyanide ions in waste water and, more particularly, to an improved apparatus and method for hydrolyzing cyanide ions in waste water into ammonia and formate, in which waste water is fed through a reactor heated to a temperature suitably for hydrolysis.

Background Art

Cyanide ions in the form of free cyanide ions, complex ferrocyanide ions, or both are formed as byproducts of several industrial processes, such as the production of pure aluminum by reduction of alumina where they can be found in spent potlining, and various methods have been developed for hydrolyzing these potentially harmful ions into less harmful chemicals. For example, according to the patentees of US-A-4,042,502 (Schmidt), cyanide ions in cyanide ion-containing wastes can be oxidized to less harmful substances at high temperatures and pressures in a batch reactor. The process contemplates subjecting the liquid to a temperature shock, and then passing the cyanide-containing solution through a tubular batch process reactor at a pressure of between about 40 and 140 atmospheres in the presence of concentrated sulfuric acid.

US-A-4,812,243 (Brandenburg) discloses a second approach to decomposition of cyanide ions in cyanide ion-containing liquids. The patent discloses a continuous wet air oxidation treatment process which appears to involve the introduction of a preheated, pressurized oxygen-containing gas with water for dilution into a vertical bubble-type reactor where wet oxidation occurs. The waste, water and gas mix within the reactor and are raised to a temperature between about 200 to 370°C, at pressures between 2069 and 13,790 kPa (300 and 2000 p.s.i.g.). Brandenburg acknowledges, however, that the process seems to engender rapid scale build-up. To remedy this, Brandenburg suggests providing dual reactors, allowing one to be shut down to remove scale, while the other reactor continues operation.

EP-A-0349035 relates to a process and apparatus for the decomposition of cyanide complexes in waste material. The cyanide-containing slurry is heated, first in a feed product exchanger and then with steam. A heat exchanger is used to pre-heat the liquid, in addition to steam, and the thus pre-heated slurry is then passed into three coaxial and contiguous, vertically-disposed liquid filled vessels, and is then cleaned and cooled for re-use or discharge.

GB-A-2076388 relates to a process and apparatus for the treatment of a liquid containing a nickel cyanide compound, and is concerned with a way of producing uniform heating of the liquid to ensure that all of the waste cyanide-containing material is decomposed. This requires uniform heating which is achieved in part by injecting steam into a pipe for supplying liquid to the reactor.

The high solids content of cyanide-containing waste liquids seems to present particularly difficult scale accumulation problems, requiring the operator to frequently shut the reactor down to remove scale. This makes hydrolysis processes particularly difficult to operate on a continuous basis and thus increases treatment times and cost. An attempt to provide a continuous reactor which can continuously hydrolyze cyanide ions in a liquid into ammonia and formate is discussed in Kimmerle et al., "Cyanide Destruction in Spent Potlining," Light Metals 89, pp. 387-394 (P.G. Campbell (ed)). The authors appear to propose a tubular reactor heated by a coaxial heat exchanger which hydrolyzes cyanide and ferrocyanide ions contained in an alkaline solution of spent potlining leachate. The use of heat exchangers, particularly coaxial heat exchangers, however, leads to such rapid scaling of the tubular reactor that the flow in the reactor is soon reduced to ineffective rates, necessitating shut down to remove accumulated scale.

None of the foregoing approaches has provided a satisfactory solution to the problem of reducing or avoiding the build-up of scale during cyanide ion detoxification in a continuous reactor.

Disclosure of the Invention

According to one aspect of the invention, there is provided an apparatus for continuous thermal hydrolysis of cyanide ions and cyanide-containing ions contained in an alkaline liquid, including a single reactor for hydrolysing said ions in said liquid, an inlet conduit for introducing said liquid into said reactor, an outlet conduit for removal of said liquid from said reactor, and heating means for heating said liquid in said reactor to a preselected temperature, characterized in that a sole pre-heating means is provided in fluid communication with said inlet conduit, said pre-heating means having an inlet for injecting a hot fluid into said liquid for rapidly and uniformly heating said liquid to a preselected temperature prior to introduction of said liquid into said reactor, in that the heating means is provided externally of the reactor and capable of providing heat to the liquid in the reactor at a rate of 1.55 watts/cm$^2$ or less, and in that said reactor is elongated, having a ratio of internal length to diameter in the range of 20-40:1, and has longitudinally extending walls provided with internal surfaces orientated substantially vertically in use to minimize scale build-up.

According to another aspect of the invention, there is provided a process for hydrolysing an alkaline cyanide-containing liquid in which said liquid is continuously fed through a single reactor and heated in said reactor to a preselected temperature, characterized in that said liquid is fed through a reactor (12) having longitudinally extending walls provided with internal surfaces oriented substantially vertically, in that said liquid is rapidly and uniformly heated prior to introduction into said reactor solely by introducing a hot fluid into the liquid, and in that the preheated fluid is passed through said reactor in a downward substantially vertical direction while heating the liquid in the reactor from outside at a rate of 1.55 watts/cm$^2$ or less in order to minimize the formation of scale.

In order to minimize scale formation, preliminary heating (or pre-heating) of the cyanide-containing liquid is carried out (preferably to a temperature of about 100-300°C) before it enters the reactor. This requires heat input in a way which produces substantially uniform heating throughout the liquid, that is to say one which avoids the formation of sharp temperature gradients, e.g. of the type which are produced by passing a liquid over a large heated surface. The liquid should be as free of temperature gradients as it is possible to make it. The heat input should nevertheless produce rapid, and preferably instantaneous, heating.

The preliminary heating method involves the injection of a hot fluid into the liquid stream, preferably through a rapid mixing device such as a venturi nozzle. The venturi would normally include a liquid inlet into which the cyanide-containing liquid may enter, a steam inlet for introducing steam under pressure into the cyanide-containing liquid, and a liquid outlet from which cyanide-containing liquid having steam injected therein passes to the reactor. The venturi should be positioned close to the reactor to minimize heat loss or may be positioned actually in the entrance to the reactor. Fluid heating accompanied by rapid mixing carried out in apparatus of this type avoids the formation of sharp temperature gradients and the presence of heated surfaces on which scale can form. Less desirably, however, a highly efficient heater, such as an electric heating coil, could be employed instead. When a hot fluid is used, the preferred fluid is steam at a pressure of about 827 to 2,069 kPa (120-300 p.s.i.g.), more preferably about 1,034 to 1,379 kPa (150-200 p.s.i.g.), with sufficient steam being used to raise the temperature of the liquid entering the reactor to 100-300°C, preferably 100-250°C.

The preliminary heating step reduces the need for additional heating in the reactor itself, again reducing sharp temperature gradients and avoiding the need for hot surfaces. As a result of the preliminary heating step, the heat input required in the reactor is reduced. The reactor has an external heating apparatus which introduces less than 1.55 watts/cm$^2$ (10 watts/square inch) into the liquid inside the reactor. Such heating densities act to minimize scale formation.

The reactor is orientated substantially vertically in order to reduce scale accumulation and is elongated so that substantially all of the liquid in the reactor is kept constantly in rapid motion (so that all of the liquid preferably has a minimum velocity of about 8m/sec.), while allowing suitable retention time for substantially complete reaction. Ideally, the liquid should remain in the reactor for about 20 to 90 minutes, preferably 30 to 60 minutes at a temperature of 150-300°C, more usually 150-200°C, and normally at a pressure of 827-2,069 kPa (120-300 p.s.i.g.) As an example, an elongated vertical reactor of about 10.7m (35 feet) in length and about 30.5 cm (12 inches) in diameter is suitable, but the 5 dimensions are of course a function of the flow rate it is desired to accommodate. However, the ratio of the internal length to diameter of the reactor falls within the range of 20-40:1, respectively.

If necessary, means for introducing a base, such as aqueous caustic soda (either dissolved in fresh water or in a compatible wastewater stream) or spent Bayer process liquor having adequate caustic soda content, into the liquid may be provided in order to maintain highly alkaline conditions (preferably pH>12). Such means is normally provided in advance of the preliminary heating means, but could be provided elsewhere if the desired effect is obtained.

Further features and advantages of the invention will be apparent from the detailed description of preferred embodiments set forth below, together with the accompanying drawings.

Brief Description of the Drawings

Fig. 1 is a schematic flow diagram of one embodiment of an improved continuous reactor apparatus of the present invention;

Fig. 2 is a front elevational view, partly in section, of a hot fluid injecting apparatus for use in the preferred embodiment of the improved continuous reactor apparatus of Fig. 1; and

Fig. 3 is a graphical representation of the weekly average of the percentage of cyanide remaining after hydrolysis to ammonia and formate in an actual test of the improved continuous reactor apparatus of Fig. 1 over a seven month period.

Best Modes for Carrying Out the Invention

The storage and eventual recycling or conversion of spent potlining leachate from the aluminum reduction process constitutes one of the aluminum industry's major environmental concerns. During operation of aluminum reduction cells, in which alumina is reduced to aluminum metal, cyanide ions (CN⁻) are formed at the cathode with the carbonaceous material held at reducing potential through what is probably a still unknown mechanism. The cyanides are mostly in the form of sodium cyanide salts and tend to collect in the cooler areas of the potlining such as the sidewall blocks and cathode blocks closest to the busbars. Thiocyanates may form, perhaps due to the residual sulfur in the original cathode materials, or perhaps due to transport of sulfate ions from anode to cathode followed by the reduction of sulfite and other electronegative species.

In addition, large amounts of water are used to cool the reduction cell during potlining removal. When the spent potlining, including not only the carbon blocks, sidewall and monolithic carbon, but also the refractory brick, parts of the shell, together with the odd piece of iron, steel and aluminum, are stored for any extended period of time, the highly soluble sodium cyanide will react under humid conditions with any rust present to form a stable iron cyanide complex. Moreover, containment of spent potlining in a landfill or a temporary storage site permits rain water containing the spent potlining to leach cyanide out of the carbon matrix, and the cyanide ions often convert to more stable metal cyanide complexes.

The waste water from potlining storage facilities typically contains the following concentrations of cyanide ions and other chemicals.

| Fluoride | 3 g/l |
| Total Cyanide | 5 g/l |
| Ferricyanide $[Fe(CN)_6]^{4-}$ | 4280 ppm |
| Ferrocyanide $[Fe(CN)_6]^{3-}$ | <10 ppm |
| Thiocyanate $(SCN^-)$ | 510 ppm |
| Sodium Sulfate | 6 g/l |
| Sodium Carbonate | 40 g/l |

The cyanide, in whatever form it occurs, must be hydrolyzed or otherwise converted into more harmless species such as ammonia and formate. Ferricyanide complexes may be hydrolyzed in a strong base according to the following general equations:

$$2[Fe(CN)_6]^{4-} + 4OH^- + 1/2\ O_2 \rightarrow Fe_2O_3 + 2H_2O + 12CN^-$$

and,

$$3[Fe(CN)_6]^{4-} + 60H^- + 1/2\ O_2 \rightarrow Fe_3O_4 + 3H_2O + 18CN^-$$

Thereafter, the cyanide ion $(CN^-)$ forms ammonia and formic acid or formate according to the equation below:

$$HCN + 2H_2O \rightarrow HCOOH + NH_3$$

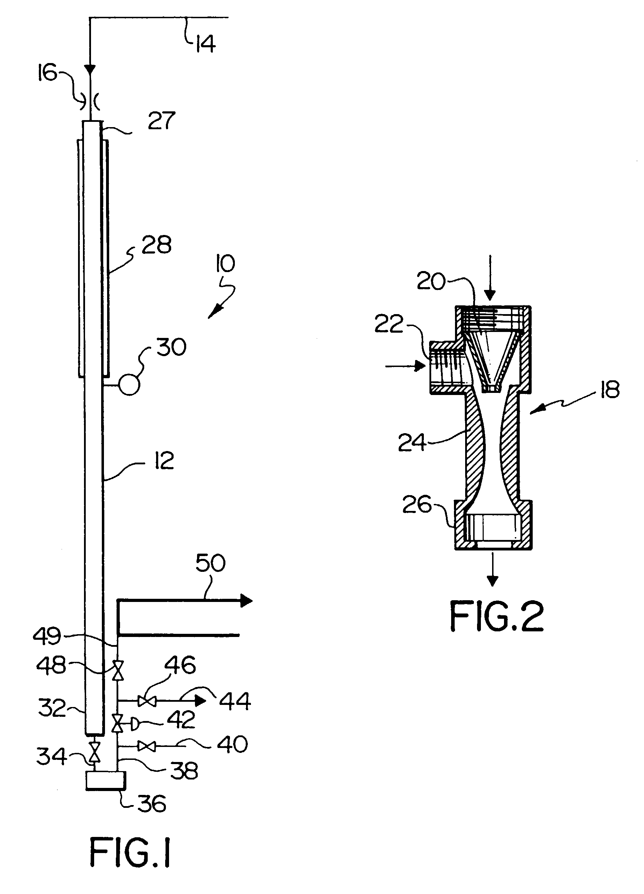

Base catalyzed degradation of cyanide can occur in an apparatus for continuous thermal hydrolysis of cyanide ions in a cyanide-containing liquid, schematically diagrammed in Fig. 1 and generally designated by the reference numeral 10. The apparatus 10 generally comprises an elongated tubular reactor 12 sized to enable cyanide-containing liquid to be held in the reactor 10 for a predetermined reaction time, a conduit 14 for supplying a cyanide-containing liquid to the reactor 12, and an inlet 16, in fluid communication with the conduit 14, for injecting a hot fluid into the liquid. As stated previously, the reactor operates in basic conditions, so the apparatus also includes means (not shown) for adjusting the pH of the cyanide-containing liquid to one which is strongly basic. This pH adjustment may be easily accomplished by adding a base such as spent Bayer process liquor or caustic soda, so that the pH of the cyanide-containing liquid will be strongly basic (in excess of about 12).

As best shown in Fig. 2, the inlet 16 (Fig. 1) includes a mild steel venturi 18 having a first bell shaped orifice 20 through which cyanide-containing liquid (not shown) may enter. The orifice 20 also includes at one side a steam entrance 22, such as a nozzle or other fitting to which a 5cm (2 inch) diameter high pressure steam carrying pipe (not shown) may be connected. The venturi 18 includes a constriction 24 followed by a second bell shaped orifice 26 through which the cyanide-containing liquid (not shown) rapidly or instantly heated to a uniform temperature (i.e. substantially without temperature gradients) by the injection of steam may pass to the reactor 12. The venturi 18 should preferably be about 46cm (18 inches) long and have a diameter of about 2.5cm (1 inch) at the inlet 16, and a diameter of about 2cm (3/4 inches) at the narrowest part of the constriction 24.

Referring again to Fig. 1, the elongated tubular reactor 12 is preferably a heat treated Incoloy™ 600 tube about 11 metres (35 feet) in length and about 30cm (12 inches) in diameter. The exact dimensions of the tubular reactor 12 are not critical, provided that the length and diameter are chosen with a view toward obtaining sufficient retention time of the cyanide-containing liquid in the reactor to permit substantially complete (>99.9%) degradation of cyanide ions contained in the liquid, while maintaining sufficiently high velocity of the liquid being processed to permit continuous processing of the waste without fouling by scale. The following dimensions are illustrative:

| Piping Diameter | | Nominal Diameter of Reactor | | Permissible Throughput | |
|---|---|---|---|---|---|
| mm | (in) | cm | (in) | L/min | (USGPM) |
| 22 | (0.875) | 41 | (16) | 23 | (6) |
| 16 | (0.625) | 30.5 | (12) | 11.4 | (3) |
| 32 | (1.250) | 61 | (24) | 45.4 | (12) |

At least the upper portion 27 of the elongated tubular reactor 12 is preferably surrounded by at least one concentric electrical heating element 28 or other heat exchanger to maintain the liquid in the reactor at an elevated temperature of between about 150°C and about 250°C during processing. The liquid level in the reactor 12 is measured by a level controller 30. At the other end 32 of the reactor 12, the elongated tube drains through a 2.54cm (one inch) diameter drainage pipe 34 into a 30.5cm (one foot) diameter, 61cm (2 foot) long horizontal tank or pot 36 at the bottom of which may collect any large scale or other particles leaving the reactor 12.

The tank 36 has a 1.6cm (5/8 inch) diameter exit pipe 38 which includes a sampling port 40 and a control valve 42. Recycling conduit 44 carries liquid back to the contaminated liquid conduit 14, where necessary to reprocess the liquid. The flow of liquid into the recycling conduit 44 may be controlled by a second control valve 46. An on-off valve 48 located in run-off pipe 49 also helps control the liquid processing rate. The apparatus for continuous hydrolysis of a cyanide-containing liquid 10 preferably discharges the liquid (not shown) into a 15.25cm (six inch) diameter discharge pipe 50 through which is flowing a cooler liquid stream from another compatible process, where available. Optionally, the decontaminated liquid can also be fed to a series of flash tanks (not shown) where the pressure can be released until it returns to atmospheric pressure. Noise reduction may be effected by drilling numerous 0.32cm (1/8 inch) diameter holes (not shown) in the 0.95cm (3/8 inch) diameter discharge pipe 38 feeding into the 15.25cm (6 inch) diameter pipe 50. These holes act as silencers.

The improved process of the present invention, as it may be used for continuous treatment of cyanide ion-containing spent potlining leachate from the reduction of alumina into aluminum metal, may also be understood by reference to Fig. 1. The cyanide ion-containing liquid (not shown) feeds into conduit 14, where caustic soda or alkaline spent Bayer process liquid may be added, for example, as an 80:20 mixture of leachate and Bayer liquor (containing about 200 g/l NaOH expressed as $Na_2CO_3$). Sufficient base is added, where necessary, to adjust to the pH of the leachate/liquor mixture to greater than 12. The alkaline or basic cyanide ion containing liquid (not shown) next flows into the inlet 16 located between the conduit 14 and the reactor 12, where a hot fluid such as steam under pressure is injected to rapidly and uniformly raise the temperature of the liquid entering the reactor. Alternatively, the liquid may be flash heated using an electric heating device located outside the reactor.

Preferably, the hot fluid is steam which is injected directly into the cyanide-containing liquid at a pressure between about 827 and about 2,069 kPa (120 and about 300 p.s.i.g.), with about 1,034 to 1,379 kPa (150 to about 200 p.s.i.g.) being presently preferred. The high pressure steam injection heats the cyanide-containing liquid more thoroughly and uniformly than heat exchangers or direct localized electrical heating located in the reactor, and avoids an excessively large temperature gradient, which may lead to the formation and deposition of scale on the inner walls of the reactor and the piping. Preferably, the temperature of the cyanide-containing liquid when it enters the elongated reactor tube is in the range from about 90°C to about 120°C.

The steam injected cyanide-containing liquor next flows into the upper portion 27 of the reactor 12 where it receives further heating by electrical heaters 28 surrounding the walls of the reactor 12. The electrical heaters 28 preferably provide about 1.55 watts/cm$^2$ (10 watts per inch$^2$) or less to prevent or substantially reduce scale formation at the point of heating.

The cyanide-containing liquid is maintained in the substantially vertical elongated reactor tube 12 for a retention time of between about 20 to about 90 minutes, depending on the temperature of the liquid. About 30 to 60 minutes of reaction time seems sufficient to degrade the cyanide contained in the liquid and is therefore preferred. Advantageously, the piping the reactor 12 is predominantly vertical to help prevent scale build-up (which is more likely to occur in a horizontal surface) and of a sufficiently narrow diameter so that the linear velocity of the liquor is at least 8.6 m/sec, in order to further reduce the opportunity for scale build-up on the interior walls of the reactor 12.

The liquid travels through the reactor tube 12, and when it reaches the lower portion 32 of the tubular reactor 12, it flows into a narrower drainage pipe 34 and then into the tank or pot 36 where any scale particles contained in the liquid may settle. The liquid continues to flow through the exit pipe 38 where it may be sampled at the sampling port 40 to determine the percentage of CN⁻ which has been destroyed.

From here, the liquid may be fed through recycling pipe 44 to direct it back to the feed conduit 14 to enable further processing, if necessary, to reduce the amount of cyanide contained in the liquid. Liquid not shunted into the recycling pipe 44 continues through to a discharge pipe 50 where it may enter a series of flash tanks (not shown) to return the liquid to atmospheric pressure. It may also be fed into a cooler stream of compatible liquid for further use or eventual discharge.

The following Examples are intended to be illustrative and representative of the practice of the invention, and not to be construed as limiting the scope of the invention in any manner.

### EXAMPLE 1

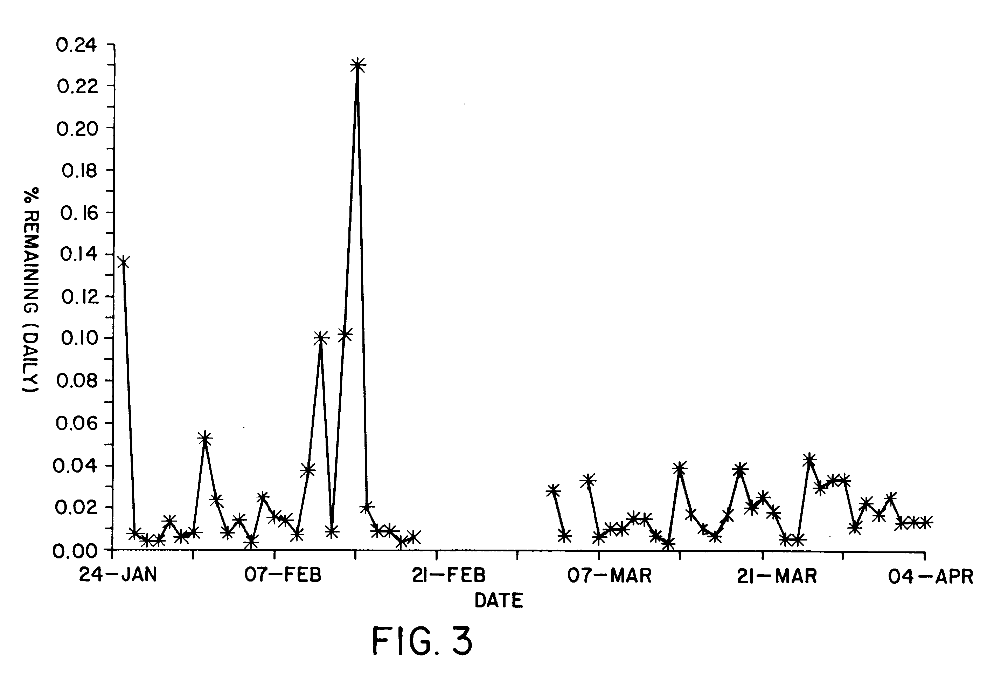

The reactor apparatus using steam injection and accessory heating in accordance with the foregoing description was tested for a seven month period without any blockages due to scaling. The composition of the liquid was tested and found to be in accordance with Table 1 above, and the weekly average the level of destruction of the cyanide content is shown in the graph in Fig. 3. Steam pressure was regulated to be fed in at a pressure between about 1,103 and about 1,310 kPa (about 160 and about 190 p.s.i.g.). The injection of steam instantly and uniformly raised the temperature of the liquid so that it ranged from about 90°C to about 100°C on entry into the continuous reactor. Accessory heating maintained the temperature of the liquid in the reactor from about 160°C to about 190°C. This test data indicates a level of cyanide destruction above 99.9% and that the reactor apparatus of the present invention can be operated almost continuously for at least six months without scale build up interfering with its operation.

### EXAMPLE 2

A reactor 30cm (12 inch) inside diameter and 10.6m (35 feet) high with an effective height of 5m (16.5 feet), excluding the top space and heating element area, provides a residence time of 34 minutes at 10 L/min (2.65 USGPM) of cyanide-containing liquid. To give 99.9% and higher destruction of the distillable cyanides a temperature of 177°C (350°F) is required.

Direct injection (venturi) of steam at 1,241 kPa (180 p.s.i.g.) raises the liquid temperature at the inlet of 100°C (212°F). Accessory heaters supplying 50 kW of energy maintain the liquid at an elevated temperature of about 177°C (350°F) in the reactor.

### EXAMPLE 3

Using the same reactor for the same percentage destruction, using steam only for heating, a flow rate of cyanide-containing liquor at 10 L/min (2.65 USGPM) given a residence time in the reactor of 45 minutes requiring an operating temperature of 173°C (343°F). Steam was fed in at an average pressure of about 1,241 kPa (180 p.s.i.g.).

### Industrial Applicability

The invention can be used for treating waste liquors containing cyanide ions in order to make such liquors safer for disposal into the environment.

## Claims

1. An apparatus for continuous thermal hydrolysis of cyanide ions and cyanide-containing ions contained in an alkaline liquid, including a single reactor (12) for hydrolysing said ions in said liquid, an inlet conduit (14) for introducing said liquid into said reactor, an outlet conduit (34) for removal of said liquid from said reactor, and heating means (28) for heating said liquid in said reactor to preselected temperature, characterized in that a sole pre-heating means (16) is provided in fluid communication with said inlet conduit (14), said pre-heating means having an inlet for injecting a hot fluid into said liquid for rapidly and uniformly heating said liquid to a preselected temperature prior to introduction of said liquid into said reactor (12), in that the heating means (28) is provided externally of the reactor (12) and capable of providing heat to the liquid in the reactor at a rate of 1.55 watts/cm² or less, and in that said reactor is elongated, having a ratio of internal length to diameter in the range of 20-40:1, and has longitudinally extending walls provided with internal surfaces oriented substantially vertically in use to minimize scale build-up.

**2.** An apparatus according to claim 1, characterized in that said pre-heating means (16) is suitable for injecting steam under pressure into said liquid.

**3.** An apparatus according to claim 1, characterized in that said pre-heating means (16) is suitable for injecting steam at a pressure of 827 to 2,069 kPa into said liquid.

**4.** An apparatus according to claim 1, claim 2 or claim 3, characterized in that said reactor comprises an elongated substantially vertical tube.

**5.** An apparatus according to claim 1, claim 2 or claim 3, characterized in that said pre-heating means is a venturi mixer.

**6.** An apparatus according to claim 1, characterized in that said outlet conduit (34) communicates with a tank (36) for collecting particles of scale leaving the reactor.

**7.** An apparatus according to claim 6, characterized in that said tank has an outlet conduit (38) alternately communicating with said inlet conduit (14) for recycling treated alkaline liquid to said reactor or to a discharge pipe (50).

**8.** A process for hydrolysing an alkaline cyanide-containing liquid in which said liquid is continuously fed through a single reactor and heated in said reactor to a preselected temperature, characterized in that said liquid is fed through a reactor (12) having longitudinally extending walls provided with internal surfaces oriented substantially vertically, in that said liquid is rapidly and uniformly heated prior to introduction into said reactor (12) solely by introducing a hot fluid into the liquid, and in that the preheated fluid is passed through said reactor in a downward substantially vertical direction while heating the liquid in the reactor from outside at a rate of 1.55 watts/cm$^2$ or less in order to minimize the formation of scale.

**9.** A process according to claim 8, characterized in that said pre-heated fluid is passed through said reactor at a rate of flow of at least 8.6m/sec.

**10.** A process according to claim 8 or claim 9, characterized in that steam is injected into said liquid as said hot fluid.

**11.** A process according to claim 8 or claim 9, characterized in that steam is injected into said liquid as said hot fluid at a pressure of 827 to 2,069 kPa through a venturi mixer.

## Patentansprüche

**1.** Vorrichtung zur kontinuierlichen thermischen Hydrolyse von Cyanid-Ionen und cyanidhaltigen Ionen, die in einer alkalischen Flüssigkeit enthalten sind, die folgendes einschließt: einen einzigen Reaktor (12) zur Hydrolyse der Ionen in der Flüssigkeit, eine Einlaßleitung (14) zur Einführung der Flüssigkeit in den Reaktor, eine Auslaßleitung (34) zur Entfernung der Flüssigkeit aus dem Reaktor, und Heizvorrichtungen (28) zur Aufheizung der Flüssigkeit in dem Reaktor auf eine vorgewählte Temperatur,
dadurch **gekennzeichnet,** daß
eine einzige Vorheizungseinrichtung (16) in flüssiger Verbindung mit der Einlaßleitung (14) bereitgestellt ist, die Vorheizungseinrichtung besitzt einen Einlaß zur Injektion eines heißen Fluids in die Flüssigkeit zur raschen und gleichförmigen Aufheizung der Flüssigkeit auf eine vorgewählte Temperatur bevor die Flüssigkeit in den Reaktor (12) eingeführt wird, und daß die Heizvorrichtung (28) außerhalb des Reaktors (12) bereitgestellt wird und in der Lage ist, der Flüssigkeit in dem Reaktor Wärme mit einer Leistungsdichte von 1,55 Watt/cm$^2$ oder weniger zu liefern, und daß der Reaktor gestreckt ist, wobei das Verhältnis der inneren Länge zum Durchmesser im Bereich von 20 - 40:1 liegt, und daß er sich longitudinal erstreckende Wände besitzt, die mit inneren Oberflächen ausgestattet sind, die während der Verwendung weitestgehend vertikal orientiert sind, wodurch die Kesselsteinbildung minimiert wird.

**2.** Vorrichtung gemäß Anspruch 1,
dadurch **gekennzeichnet**, daß
die Vorheizeinrichtung (16) geeignet ist zur Injektion von druckbeaufschlagtem Dampf in die Flüssigkeit.

**3.** Vorrichtung gemäß Anspruch 1,

dadurch **gekennzeichnet**, daß
die Vorheizeinrichtung (16) geeignet ist zur Injektion von Dampf in die Flüssigkeit mit einem Druck von 827 bis 2 069 kPa.

**4.** Vorrichtung gemäß mindestens einem der Ansprüche 1 bis 3,
dadurch **gekennzeichnet,** daß
der Reaktor eine gestreckte im wesentlichen vertikale Röhre umfaßt.

**5.** Vorrichtung gemäß mindestens einem der Ansprüche 1 bis 3,
dadurch **gekennzeichnet,** daß
die Vorheizeinrichtung ein Venturimischer ist.

**6.** Vorrichtung gemäß Anspruch 1,
dadurch **gekennzeichnet,** daß
die Auslaßleitung (34) in Verbindung mit einem Tank (36) zum Abfangen von den Reaktor verlassenden Kesselsteinpartikeln verbunden ist.

**7.** Vorrichtung gemäß Anspruch 6,
dadurch **gekennzeichnet,** daß
der Tank eine Auslaßleitung (38) aufweist, die wechselweise mit der Einlaßleitung (14) zur Recyclierung behandelter alkalischer Flüssigkeit in den Reaktor oder mit einem Ausflußrohr (50) in Verbindung steht.

**8.** Verfahren zur Hydrolysierung einer alkalischen cyanidhaltigen Flüssigkeit, worin die Flüssigkeit kontinuierlich durch einen einzigen Reaktor hindurchgeführt und in dem Reaktor auf eine vorgewählte Temperatur erhitzt wird,
dadurch **gekennzeichnet,** daß
die Flüssigkeit durch einen Reaktor (12) mit sich longitudinal erstreckenden Wänden, die mit weitestgehend vertikal orientierten inneren Oberflächen ausgestattet sind, hindurchgeleitet wird, und daß die Flüssigkeit vor der Einführung in den Reaktor (12) rasch und gleichförmig ausschließlich durch Einführung eines heißen Fluids in die Flüssigkeit aufgeheizt wird, und daß das vorgeheizte Fluid durch den Reaktor in einer abwärts gerichteten, weitestgehend vertikalen Richtung hindurchgeleitet wird, wobei die Flüssigkeit in dem Reaktor von außen mit einer Leistungsdichte von 1,55 W/cm$^2$ oder weniger zu Minimierung der Kesselsteinbildung geheizt wird.

**9.** Verfahren gemäß Anspruch 8,
dadurch **gekennzeichnet**, daß
das vorgeheizte Fluid durch den Reaktor mit einer Flußgeschwindigkeit von mindestens 8,6 m/s hindurchgeleitet wird.

**10.** Verfahren gemäß Anspruch 8 oder 9,
dadurch **gekennzeichnet**, daß
als heißes Fluid Dampf in die Flüssigkeit injiziert wird.

**11.** Verfahren gemäß Anspruch 8 oder 9,
dadurch **gekennzeichnet,** daß
als heißes Fluid Dampf mit einem Druck von 827 bis 2 069 kPa durch einen Venturimischer in die Flüssigkeit injiziert wird.

## Revendications

**1.** Dispositif pour l'hydrolyse thermique en continu d'ions cyanures et d'ions contenant du cyanure contenus dans un liquide alcalin, comprenant un réacteur unique (12) pour hydrolyser lesdits ions dans ledit liquide, un conduit d'entrée (14) pour introduire ledit liquide dans ledit réacteur, un conduit de sortie (34) pour extraire ledit liquide dudit réacteur, et des moyens de chauffage (28) pour chauffer ledit liquide dans ledit réacteur à une température présélectionnée, caractérisé en ce qu'un seul moyen de préchauffage (16) est prévu en communication de fluide avec ledit conduit d'entrée (14), ledit moyen de préchauffage ayant une entrée pour injecter un fluide chaud dans ledit liquide pour chauffer rapidement et uniformément ledit liquide à une température présélectionnée avant l'introduction dudit liquide dans ledit réacteur (12), en ce que les moyens de chauffage (28) sont prévus extérieurement au réacteur (12) et sont capables de fournir de la chaleur au liquide dans le réacteur avec un débit de 1,55 watt/cm$^2$

ou moins et en ce que ledit réacteur est de forme allongée, avec un rapport de la longueur au diamètre internes dans l'intervalle de 20-40:1, et possède des parois s'étendant longitudinalement prévues avec des surfaces internes orientées sensiblement verticalement en service pour minimiser la formation de tartre.

**2.** Dispositif selon la revendication 1, caractérisé en ce que ledit moyen de préchauffage (16) est approprié à l'injection de vapeur d'eau sous pression dans ledit liquide.

**3.** Dispositif selon la revendication 1, caractérisé en ce que ledit moyen de préchauffage (16) est approprié à l'injection de vapeur d'eau à une pression de 827 à 2 069 kPa dans ledit liquide.

**4.** Dispositif selon la revendication 1, la revendication 2 ou la revendication 3, caractérisé en ce que ledit réacteur comprend un tube allongé sensiblement vertical.

**5.** Dispositif selon la revendication 1, la revendication 2 ou la revendication 3, caractérisé en ce que ledit moyen de préchauffage est un mélangeur venturi.

**6.** Dispositif selon la revendication 1, caractérisé en ce que ledit conduit de sortie (34) communique avec un réservoir (36) de recueil des particules de tartre quittant le réacteur.

**7.** Dispositif selon la revendication 6, caractérisé en ce que ledit réservoir comporte un conduit de sortie (38) communiquant alternativement avec ledit conduit d'entrée (14) pour recycler ledit liquide alcalin traité audit réacteur ou avec un tuyau d'évacuation (50).

**8.** Procédé pour hydrolyser un liquide alcalin contenant du cyanure, dans lequel ledit liquide est alimenté en continu à travers un réacteur unique et chauffé dans ledit réacteur à une température présélectionnée, caractérisé en ce que ledit liquide est alimenté à travers un réacteur (12) ayant des parois s'étendant longitudinalement pourvues de surfaces internes orientées sensiblement verticalement, en ce que ledit liquide est chauffé rapidement et uniformément avant introduction dans ledit réacteur (12) uniquement en introduisant un fluide chaud dans ledit liquide et en ce qu'on fait passer le fluide préchauffé à travers ledit réacteur selon une direction sensiblement verticale vers le bas tout en chauffant le liquide dans le réacteur à partir de l'extérieur avec un débit de 1,55 watt/cm$^2$ ou moins afin de minimiser la formation de tartre.

**9.** Procédé selon la revendication 8, caractérisé en ce qu'on fait passer ledit fluide préchauffé à travers ledit réacteur avec un débit d'au moins 8,6 m/sec.

**10.** Procédé selon la revendication 8 ou la revendication 9, caractérisé en ce que la vapeur d'eau est injectée dans ledit liquide en tant que fluide chaud.

**11.** Procédé selon la revendication 8 ou la revendication 9, caractérisé en ce que la vapeur d'eau est injectée dans ledit liquide en tant que fluide chaud à une pression de 827 à 2 069 kPa à travers un mélangeur venturi.

FIG.1

FIG.2

FIG. 3